# EUROPÄISCHE PATENTSCHRIFT

(11) **EP 4 431 210 B1**
(45) Veröffentlichungstag und Bekanntmachung des Hinweises auf die Patenterteilung: **19.08.2026**
(21) Anmeldenummer: 23177645.1
(22) Anmeldetag: 06.06.2023
(51) Int. Cl.: B23C 3/00, B23P 23/00, B44B 3/00, G05B 19/00, B23Q 17/20

(54) **MITTELS EINER BEARBEITUNGSMASCHINE DURCHZUFÜHRENDE KENNZEICHNUNGS- UND AUSLESEVERFAHREN, BEARBEITUNGSVERFAHREN, BEARBEITUNGSMASCHINE UND FERTIGUNGSLINIE**
IDENTIFICATION AND READING METHOD, MACHINING METHOD, MACHINING MACHINE AND PRODUCTION LINE TO BE CARRIED OUT BY MEANS OF A MACHINING MACHINE
PROCÉDÉ D'IDENTIFICATION ET DE LECTURE À EXÉCUTER AU MOYEN D'UNE MACHINE D'USINAGE, PROCÉDÉ D'USINAGE, MACHINE D'USINAGE ET LIGNE DE PRODUCTION

(30) Priorität: 16.03.2023 DE 102023106632
(43) Veröffentlichungstag der Anmeldung: 18.09.2024
(73) Patentinhaber: Grob-Werke GmbH & Co. KG, 87719 Mindelheim (DE)
(72) Erfinder: Kormann, Benjamin, 87719 Mindelheim (DE)
(74) Vertreter: KASTEL Patentanwälte PartG mbB

(56) Entgegenhaltungen:
- EP-B1- 0 779 120
- DE-A1- 2 834 376
- DE-B4- 102017 107 672
- DE-C2- 19 800 034
- DE-T2- 69 431 202
- US-A1- 2015 231 710
- US-B2- 8 965 795

## Beschreibung

Die Erfindung betrifft ein mittels einer Bearbeitungsmaschine zur spanabhebenden Bearbeitung durchzuführendes Kennzeichnungsverfahren zum Kennzeichnen eines Werkstücks. Weiter betrifft die Erfindung ein mittels einer Bearbeitungsmaschine zur spanabhebenden Bearbeitung durchzuführendes Ausleseverfahren zum Lesen eines Kennzeichens, welches durch ein solches Kennzeichnungsverfahren erhältlich ist oder erzeugt worden ist. Weiter betrifft die Erfindung ein Werkzeugbearbeitungsverfahren zur spanabhebenden Bearbeitung von Werkstücken mittels einer Bearbeitungsmaschine unter Durchführen eines solchen Kennzeichnungs- und/oder Ausleseverfahrens. Weiter betrifft die Erfindung eine Bearbeitungsmaschine, die zum Durchführen eines oder mehrerer der vorgenannten Verfahren ausgebildet ist. Weiter betrifft die Erfindung eine Fertigungslinie mit mehreren solcher Bearbeitungsmaschinen. Schließlich betrifft die Erfindung ein Computerprogramm mit Anweisungen zum Durchführen eines oder mehrerer solcher Verfahren.

Zum technologischen Hintergrund und zum Stand der Technik wird insbesondere auf folgende Literaturstellen verwiesen:
[1] DE 29 29 673 A1
[2] Werkzeugmaschine - Wikipedia, abgerufen am 12.05.2023 unter https:/Ide.wikipedia.org/wiki/Werkzeugmaschine
[3] Bearbeitungszentrum - Wikipedia, abgerufen am 12.05.2023 unter https:/Ide.wikipedia.org/wiki/Bearbeitungszentrum
[4] WO2013/120076A1
[5] DE 11 2016 003 020 T5
[6] US 2020/016 690 A1
[7] CN 205970541 U
[8] WO 2014/113 865 A1
[9] US 2014/263 667 A1
[10] GB 1 201 487 A
[11] Webseite
   https://www.grobgroup.com/produkte/produktbereiche/zerspanungstechnik /bearbeitungszentren/
[12] EP 0 779 120 B1
[13] DE 694 120 B1
[14] DE 198 000 034 C2
[15] US 2015/231710 A1

offenbart eine Schlüsselschneidmaschine und ein damit durchführbares Schlüsselschneidverfahren zum Schneiden eines definierten Schlüsselbartkerbmusters. Das Schlüsselbartkerbmuster kann entweder analog oder digital kopiert werden. Im analogen Modus wird ein Schlüsselbart eines zu kopierenden Schlüssels linear abgefahren und die Abtastbewegung wird auf ein Schneidwerkzeug übertragen, so dass dieses bei der linearen Bewegung den entsprechenden Abstand zu einem Schlüsselrohling einnimmt und die Anordnungen, Formen und Tiefen der Kerben des Schlüsselbarts überträgt. Im digitalen Modus wird das Schneidwerkzeug aufgrund eines vorgegebenen Codes gesteuert.

offenbart eine Trägervorrichtung und ein Trägerverfahren für Tiefdruckzylinder. Ein Testmuster wird auf eine Position auf der Oberfläche des Tiefdruckzylinders geschnitten. Eine Steuervorrichtung weist Sensoren auf, um eine relative Position des Zylinders bezüglich eines Tiefdruckkopfes festzustellen. Die Literaturstellen [4] bis [10] offenbaren unterschiedliche Verfahren und Vorrichtungen zum Kennzeichnen oder Markieren von Objekten.
In [1] bis [3] und [14] sind unterschiedliche Beispiele für numerisch gesteuerte Bearbeitungsmaschinen zur spanabhebenden Bearbeitung von Werkstücken bekannt. Beispiele für Bearbeitungsmaschinen zur spanabhebenden Bearbeitung sind insbesondere numerisch gesteuerte Werkzeugmaschinen, siehe [2], zum Drehen, Fräsen und/oder Bohren. Eine bei Ausführungsformen der Erfindung besonders bevorzugte Form von Bearbeitungsmaschinen sind Bearbeitungszentren, siehe [3] und [11]. Aus [1] ist bekannt, dass numerisch gesteuerte Werkzeugmaschinen (wie in [2] definiert) oder dergleichen Bearbeitungsmaschinen, insbesondere Bearbeitungszentren (siehe [3]), Taster aufweisen können, um den Fortschritt und/oder die Qualität der Bearbeitung durch Abtasten des Werkstücks zu erfassen.

Aus [15] ist bekannt, ein Werkstück zu kennzeichnen und es anschließend zur Bearbeitung zu einer Werkzeugmaschine zu transportieren.

Aktuell wird in vielen Fertigungsanlagen als erster Arbeitsschritt jedes Werkstück individuell gekennzeichnet und in späteren Arbeitsfolgen identifiziert.

Gängige Methoden zur Kennzeichnung sind:
- Aufkleber
- Lasern
- Nadelprägen
- RFID-Tag nach der ersten Zerspanungs-OP anschrauben

Gängige Methoden zum Auslesen:
- Scanner
- Kameras
- RFID-Leser

Folgende Punkte sind Motivationen für die Kennzeichnung und Identifikation der Werkstücke:

### Identifizierung des Werkstück-Typs

Um die passenden nachfolgenden Operationen auszuführen, ist es vorteilhaft, den Werkstücktyp zu identifizieren. Ein Werkstück, das in der ersten Operation als Typ A bearbeitet wurde sollte in der nächsten Operation auch eine Bearbeitung vom Typ A bekommen.

### Zuordnung von Werkstücken zu Chargen

Falls in einer bestimmten Charge ein Problem festgestellt wurde, können die entsprechenden Werkstücke gesperrt werden und aussortiert werden. Z.B. könnten alle Werkstücke aussortiert werden, die an einem bestimmten Tag auf einer bestimmten Maschine bearbeitet wurden, weil ein Problem mit dieser Maschine in diesem Zeitraum festgestellt wurde.

### Auswertung von Meta-Daten

Mithilfe der Werkstück-Identifizierung können Daten wie z.B. die Dauer einer bestimmten Operation, Durchlaufzeiten, aufgetretene Fehler, etc. ermittelt werden. Dadurch können Nachkalkulationen, Fehleranalyse, etc. automatisiert durchgeführt werden.

Nachteilig bei bisherigen Werkstückkennzeichnungs- und
- identifizierungstechniken ist, dass sowohl für die Kennzeichnung als auch für die Identifikation spezielle Vorrichtungen oder zusätzliche Hardware (Laser, Nadelpräger, Scanner, Kameras, RFID-Leser) oder Verbrauchsmaterialien (Aufkleber, RFID-Tags) erforderlich sind.

Außerdem besteht bei der manuellen Benutzung von Handscannern eine Verwechslungsgefahr. Der Bediener könnte Werkstück A scannen, aber Werkstück B in die Maschine einlegen.

Die Erfindung hat sich zur Aufgabe gestellt, die Identifizierung von Werkstücken im Zuge einer spanabhebenden Bearbeitung zu vereinfachen.

Zum Lösen dieser Aufgabe schafft die Erfindung ein Verfahren zur Kennzeichnung von Werkstücken gemäß Anspruch 1. Ein Werkzeugbearbeitungsverfahren unter Verwendung solcher Kennzeichnungen, eine zum Durchführen solcher Verfahren eingerichtete Bearbeitungsmaschine, eine mehrere solcher Bearbeitungsmaschine enthaltende Fertigungslinie sowie ein Computerprogramm mit maschinenlesbaren Anweisungen zum Durchführen der Verfahren sind Gegenstand der weiteren Nebenansprüche.

Vorteilhafte Ausgestaltungen sind Gegenstand der Unteransprüche.

Die Erfindung schafft gemäß einem ersten Aspekt davon ein mittels einer Bearbeitungsmaschine zur spanabhebenden Bearbeitung durchzuführendes Kennzeichnungsverfahren zum Kennzeichnen eines Werkstücks umfassend:
a) Bereitstellen eines Werkzeugs zur spanabhebenden Bearbeitung an einer drehbaren Werkzeugaufnahme der Bearbeitungsmaschine,
b) relatives lineares Bewegen der drehenden Werkzeugaufnahme und des Werkstücks entlang einer Linie an der Oberfläche des Werkstücks,
c) Steuern des Abstandes von Werkzeugaufnahme und Werkstück während des linearen Bewegens, so dass das Werkzeug wahlweise eine

Bearbeitungsposition zur spanabhebenden Bearbeitung des Werkstücks und eine Freigabeposition, in der das Werkzeug das Werkstück nicht erfasst, während der linearen Bewegung derart einnimmt, dass entlang der Linie durch spanabhebende Bearbeitung mit dem Werkzeug ein Muster von Markierungen zum Bilden des Kennzeichens an der Oberfläche des Werkstücks erzeugt wird.

Vorzugsweise umfasst Schritt a) den Schritt:
a1) Auswahl des Werkzeugs aus einer Gruppe von Werkzeugen, die ein Schneidwerkzeug, einen Fräser, ein einschneidiges Werkzeug, ein mehrschneidiges Werkzeug, einen Kugelfräser, einen einschneidigen Kugelfräser, einen kegelförmigen Fräser und Kombinationen der vorgenannten Werkzeuge aufweist.

Vorzugsweise umfasst Schritt a) den Schritt:
a2) Bereitstellen des Werkzeugs an einer Spindel der Bearbeitungsmaschine.

Vorzugsweise umfasst Schritt b) den Schritt:
b1) im Wesentlichen gleichmäßiges lineares relatives Bewegen von Werkzeugaufnahme und Werkstück.

Im Wesentlichen bedeutet hier, dass im Großen und Ganzen eine gleichmäßige lineare Bewegung mit annähernd gleichbleibender Geschwindigkeit erfolgt. Geringe Anpassungen der Geschwindigkeit sind allerdings möglich. Bei einigen Ausführungsformen erfolgt eine gleichmäßige lineare Bewegung mit gleichbleibender Relativbewegungsgeschwindigkeit. Wie im Folgenden noch näher ausgeführt, gibt es bei einigen anderen Ausführungsformen zum Beispiel bei einem "Abheben" des Werkzeugs von dem Werkstück am Ende des Einbringens einer einzelnen Markierung aufgrund der größeren Wegstrecke eine leichte Veränderung der Achsgeschwindigkeit, z.B. dann, wenn das Werkzeug, wie insbesondere ein Fräser ja weiterdreht und konstante Markierungsabstände erzielt werden sollen. Das "gleichmäßige lineare Bewegen" darf daher nicht zu wörtlich, und damit zu einschränkend ausgelegt werden. Im Vergleich zu den bekannten Markierungsverfahren, bei denen Gravierwerkzeuge zu der Oberfläche hin und von ihr wegbewegt werden müssen und damit große Hübe und eine große Bewegungsumkehr erforderlich ist (was dann eine hohe Bearbeitungszeit mit sich bringt), sind die Geschwindigkeitsänderungen hier aber sehr klein.

Insbesondere werden Bewegungen, bei denen die momentane Geschwindigkeit bis zu 15% Abweichungen um eine mittlere Geschwindigkeit oder Sollgeschwindigkeit aufweist, von dem Begriff "im Wesentlichen gleichmäßige Bewegung" umfasst.

Vorzugsweise umfasst Schritt b) den Schritt:
b2) Steuern der Geschwindigkeit der relativen Bewegung, um eine vorbestimmte Form der Markierungen zu erzeugen.

Vorzugsweise umfasst Schritt b) den Schritt:
b3) Bewegen des Werkstücks und/oder Bewegen der Werkzeugaufnahme.

Vorzugsweise umfasst Schritt b) den Schritt:
b4) Drehen der Werkzeugaufnahme mit im Wesentlichen gleichbleibender Drehzahl.

Auch bei den Ausführungsformen, die Schritt b4) aufweisen, bleibt die Drehzahl im Vergleich zu herkömmlichen Kennzeichnungsverfahren bei einigen Ausführungsformen gleich und bei einigen weiteren Ausführungsformen annähernd gleich, wobei geringe Anpassungen jedoch möglich sind. Gegebenenfalls gibt es bei Ausführungsformen, die den Schritt b4) enthalten, auch leichte Variationen der Spindeldrehzahl. Wie vorstehend angemerkt erfolgt bei einigen Ausführungsformen beim "Abheben" eine leichte Veränderung der Achsgeschwindigkeit, um bei konstant weiterdrehendem Werkzeug (insbesondere Fräser) gleiche Markierungsabstände zu gewährleisten. Gegebenenfalls ändert die Steuerung aber sowohl Drehzahl als auch Achsgeschwindigkeit, um dieses Ziel zu erreichen. Die "gleichbleibende Drehzahl" darf daher nicht zu wörtlich, und damit zu einschränkend ausgelegt werden.

Insbesondere werden Drehungen, bei denen die momentane Drehzahl bis zu 15% Abweichungen um eine mittlere Drehzahl aufweist, von dem Begriff "im Wesentlichen gleichbleibende Drehzahl" umfasst.

Vorzugsweise umfasst Schritt c) den Schritt:
zyklisches in Eingriff Bringen und Freigeben einer Schneide des Werkzeugs und des Werkstück, um an vorbestimmten Stellen ein Stück Material aus der Oberfläche des Werkstücks zu entfernen und so eine Markierung zu erzeugen.

Vorzugsweise umfasst Schritt c) den Schritt:
Abheben des Werkzeugs von der Oberfläche des Werkstücks zum Überspringen von Punkten.

Vorzugsweise umfasst Schritt c) den Schritt:
Einbringen einer oder mehrerer Linien oder Vertiefungen als Markierungen in das Werkstück, deren Anordnung und/oder Dimension auslesbare Daten oder Informationen des Kennzeichens beinhalten.

Vorzugsweise umfasst Schritt c) den Schritt:
Erzeugen von runden Markierungen.

Vorzugsweise umfasst Schritt c) den Schritt:
Erzeugen von Markierungen in Form von Parallelogrammen.

Vorzugsweise umfasst Schritt c) den Schritt:
Erzeugen von rechteckigen bzw. quadratischen Markierungen.

Bei einigen Ausführungsformen wird ein rein linienförmiges Kennzeichen, z.B. aus einer Anordnung von Markierungen mit unterschiedlichen Abständen und/oder Längen, vergleichbar eines Morsezeichens oder eines Barcodes, erzeugt. Bei einigen Ausführungsformen ist vorgesehen, dass die Schritte b) und c) an beabstandeten Linien wiederholt werden, um ein zweidimensionales Muster von Markierungen zum Schaffen des Kennzeichens zu erzeugen. Somit kann auch eine Art Matrix-Code erzeugt werden.

Mittels der Bearbeitungsmaschine zur spanabhebenden Bearbeitung lässt sich dann auch ein Ausleseverfahren zum Lesen des Kennzeichens, welches durch ein Kennzeichnungsverfahren nach einem der voranstehenden Ausgestaltungen erhältlich ist oder erzeugt worden ist, durchführen, umfassend:
d) Kontaktieren einer mit dem Kennzeichen versehenen Oberfläche eines Werkstücks mittels eines Messtasters der Bearbeitungsmaschine;
e) relatives lineares Bewegen des die Oberfläche kontaktierenden Messtasters und des Werkstücks entlang einer Linie von Markierungen des Kennzeichens,
f) Erfassen von abhängig von der Position erfolgten Auslenkungen des Messtasters, um so das Kennzeichen auszulesen.

Vorzugsweise umfasst das Ausleseverfahren den Schritt:
Abtasten der die Markierung enthaltenden Oberfläche des Werkstücks mittels des Messtasters.

Es können unterschiedliche Messtaster verwendet werden. Bei einigen Ausführungsformen wird zum Auslesen ein scannender Messtaster verwendet. Bei den Verfahren gemäß Ausführungsformen der Erfindung ist eine Besonderheit, dass auch Schaltmesstaster verwendet werden können. Vorzugsweise umfasst das Ausleseverfahren daher den Schritt:
Verwenden eines Schaltmesstasters.

Vorzugsweise wird der Messtaster in einer vorzugsweise gleichmäßigen linearen Bewegung über die mit Kennzeichen versehene Oberfläche des Werkstücks bewegt. Vorzugsweise wird beim Ausleseverfahren die gleiche Linie wie beim Kennzeichnungsverfahren abgefahren.

Gemäß einem weiteren Aspekt schafft die Erfindung ein Werkzeugbearbeitungsverfahren zur spanabhebenden Bearbeitung von Werkstücken mittels einer Bearbeitungsmaschine, umfassend:
g) Durchführen eines Kennzeichnungsverfahrens nach einer der voranstehenden Ausgestaltungen zum Versehen des Werkstücks mit einem Kennzeichen;
h) Identifizieren des Werkstücks durch Auslesen des Kennzeichens, insbesondere mittels eines Ausleseverfahren nach einer der voranstehenden Ausgestaltungen,
i) Durchführen einer Bearbeitung des Werkstücks in Abhängigkeit von der in Schritt h) durchgeführten Identifikation.

Es ist bevorzugt, dass Schritt g) während der Durchführung eines ersten Bearbeitungsschritts zur spanabhebenden Bearbeitung des Werkstücks durchgeführt wird und dass die Schritte h) und i) während der Durchführung eines abhängig vom ersten Bearbeitungsschritt und/oder abhängig vom Typ des Werkstücks durchzuführenden zweiten Bearbeitungsschritts durchgeführt werden. In einer Fertigungslinie kann z.B. das Kennzeichnungsverfahren an einer ersten Bearbeitungsmaschine, die einen ersten Bearbeitungsschritt ausführt, durchgeführt werden, während eine im Produktionsfluss nach der ersten Bearbeitungsmaschine durchlaufene zweite Bearbeitungsmaschine zunächst das Ausleseverfahren durchführt, um das Werkstück zu identifizieren, insbesondere zum Beispiel durch die Identifizierung, zu erkennen, dass der erste Bearbeitungsschritt durchgeführt worden ist, und dann abhängig von der Identifikation einen zweiten Bearbeitungsschritt durchführt.

Gemäß einem weiteren Aspekt schafft die Erfindung eine Bearbeitungsmaschine zur spanabhebenden Bearbeitung von Werkstücken, umfassend eine Bearbeitungseinrichtung mit wenigstens einem an einer Werkzeugaufnahme vorgesehenen Werkzeug zur spanabhebenden Bearbeitung, eine Werkzeugaufnahmeantriebeinheit zum Antreiben der Werkzeugaufnahme, eine Relativbewegungseinheit zum relativen Bewegen von Werkzeugaufnahme und Werkstück, eine Messeinrichtung zum Erfassen der Position eines Oberflächenbereichs des Werkstücks und eine Steuerung, wobei die Bearbeitungsmaschine zur Durchführung eines Verfahrens nach einer der voranstehenden Ausgestaltungen ausgebildet ist. Insbesondere ist die Werkzeugaufnahme an einer drehbar angetriebenen Spindel vorgesehen.

Erfindungsgemäß ist vorgesehen, dass die Steuerung dazu eingerichtet ist, die Bearbeitungsmaschine zum Durchführen des Kennzeichnungs-, Auslese- und/oder Bearbeitungsverfahrens nach einer der voranstehenden Ausgestaltungen anzusteuern.

Gemäß einem weiteren Aspekt betrifft die Erfindung eine Fertigungslinie oder Fertigungsanlage, umfassend mehrere Bearbeitungsmaschinen nach einer der voranstehenden Ausgestaltungen.

Gemäß einem weiteren Aspekt schafft die Erfindung ein Computerprogramm umfassend maschinenlesbare Anweisungen, die eine Bearbeitungsmaschine nach einer der voranstehenden Ausgestaltungen oder eine damit versehene Fertigungslinie veranlassen, das Kennzeichnungs-, Auslese- und/oder Bearbeitungsverfahren nach einer der voranstehenden Ausgestaltungen durchzuführen.

Vorteilhafte Ausführungsformen der Erfindung finden insbesondere in Zerspanungsmaschinen und Werkzeugmaschinen Verwendung. Für nähere Einzelheiten und weitere Merkmale bevorzugt einzusetzender Bearbeitungsmaschinen wird auf folgenden Link verwiesen:
https://www.grobgroup.com/produkte/produktbereiche/zerspanungstechnik/bearbei tungszentren/

Mit bevorzugten Ausführungsformen dieser Erfindung kann das Werkstück direkt von der Maschine mit einem Fräswerkzeug gekennzeichnet werden, bzw. mit dem Messtaster identifiziert werden. Dadurch sind keine zusätzliche Hardware (Laser, Scanner) oder Verbrauchsmaterialien (Aufkleber, RFID-Tags) nötig. Außerdem können keine Verwechslungen mehr auftreten, weil die Kennzeichnung und die Identifikation direkt in der Maschine ohne Bedienereinfluss stattfinden.

Bevorzugte Ausgestaltungen der Erfindung betreffen Werkzeugmaschinen und deren Arbeitsweisen. In vorteilhafter Weise wird mittels Bordmitteln der Werkzeugmaschine ohne zusätzliche Hardware eine Kennzeichnung von Werkstücken durchgeführt. Auch ein Auslesen von derartig hergestellten Kennzeichen kann vorzugsweise mittels Bordmitteln erfolgen. Die Kennzeichnung kann im Zuge der Bearbeitung durchgeführt werden und zu Zwecken der Identifizierung bei der Bearbeitung verwendet werden.

Ein Ausführungsbeispiel wird im Folgenden anhand der beigefügten Zeichnungen näher erläutert. Darin zeigt:
- Fig. 1: eine schematische Blockdarstellung einer Fertigungslinie mit mehreren als Werkzeugmaschinen, insbesondere Bearbeitungszentren, ausgeführten Bearbeitungsmaschinen zur spanabhebenden Bearbeitung;
- Fig. 2: eine schematische Blockdarstellung eines Ausführungsbeispiels für eine der Bearbeitungsmaschinen der Fertigungslinie;
- Fig. 3: eine perspektivische schematische Darstellung eines Werkzeugs der Bearbeitungsmaschine und eines Oberflächenbereichs eines Werkstücks während eines Kennzeichnungsverfahrens gemäß einer ersten Ausführungsform, in dem im Zuge der Bearbeitung des Werkstücks eine Kennzeichnung in die Oberfläche des Werkstücks eingebracht wird, wobei zusätzlich eine Kurve eingezeichnet ist, die die Bewegung einer Schneide des Werkzeugs anzeigt;
- Fig. 4: eine weitere perspektivische Darstellung des mit dem Kennzeichen zu versehenden Bereichs des Werkstücks zusammen mit dem Werkzeug mit einer weiteren Kurve, die das relative Anheben und Absenken des Werkzeugs und des Werkstücks darstellt;
- Fig. 5: eine schematische teils geschnittene, teils perspektivische Ansicht eines Werkzeugs der Bearbeitungsmaschine in Eingriff mit dem Werkstück bei der Durchführung des Kennzeichnungsverfahrens gemäß einer zweiten Ausführungsform;
- Fig. 6: eine Draufsicht auf die Oberfläche des Werkstücks mit einem gemäß der zweiten Ausführungsform des Kennzeichnungsverfahrens eingebrachten Kennzeichen; und
- Fig. 7: eine kombinierte schematische Darstellung des Angriffs des Werkzeugs an das Werkstück wie in Fig. 5 bei einem Kennzeichnungsverfahren gemäß einer dritten Ausführungsform zusammen mit der Ansicht auf die Oberfläche mit dem dadurch erhaltenen Kennzeichen und einem Geschwindigkeitsprofil, welches eine Vorschubgeschwindigkeit des Werkzeugs über die Oberfläche in Abhängigkeit von der Position zeigt.

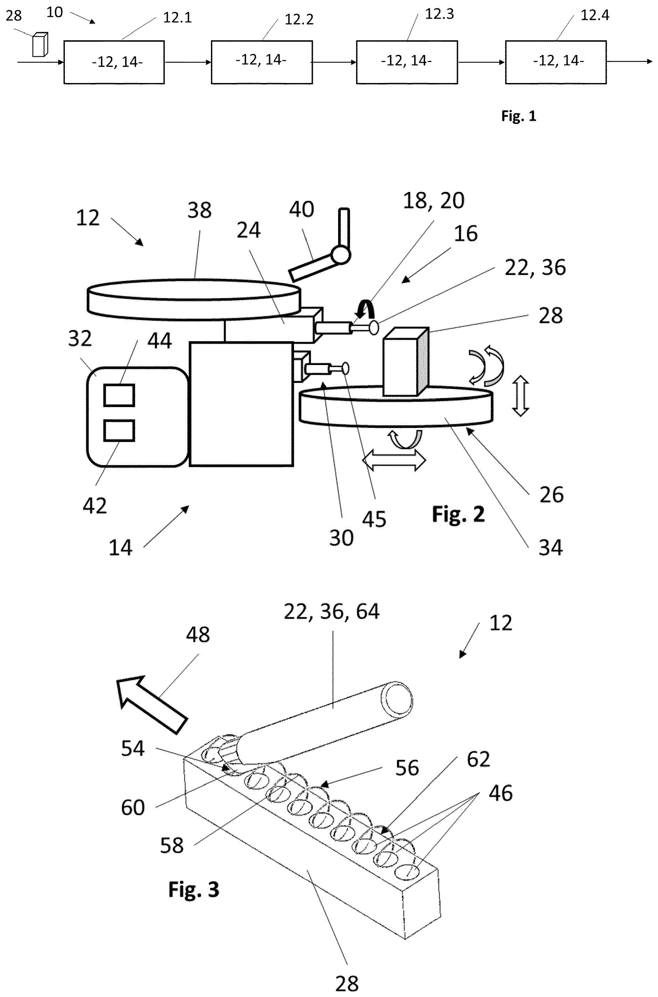

In Fig. 1 ist eine Fertigungslinie 10 zur Herstellung eines Produkts durch spanabhebende Bearbeitung eines Werkzeugs mit mehreren Bearbeitungsmaschinen 12 dargestellt. Beispielsweise wird ein Motorenteil oder ein sonstiges Teil eines komplexen Produkts durch unterschiedliche Bearbeitungsschritte hergestellt, die nacheinander an einer Reihe von Bearbeitungszentren 14, die Ausführungsbeispiele für die Bearbeitungsmaschinen 12 sind, ausgeführt werden. Anstelle von Bearbeitungszentren 14 können auch andere Werkzeugmaschinen als Bearbeitungsmaschinen 12 eingesetzt werden. Beispielsweise durchläuft ein Werkstück 28, aus dem das Produkt durch spanabhebende Bearbeitung, wie Fräsen, Drehen und/oder Bohren, hergestellt wird, nacheinander eine erste bis vierte Bearbeitungsmaschine 12.1-12.4 der Fertigungslinie 10.

Ein Beispiel für eine hier als Bearbeitungszentrum 14 ausgeführte Bearbeitungsmaschine 12, 12.1-12.4 ist in Fig. 2 dargestellt. Wie dies für z.B. Bearbeitungszentren 14 aber auch für andere Werkzeugmaschinen gut bekannt ist, siehe [1] bis [3] sowie [11], weist die Bearbeitungsmaschine 12 eine Bearbeitungseinrichtung 16 mit wenigstens einem an einer Werkzeugaufnahme 18 - insbesondere Spindel 20 - vorgesehenen Werkzeug 22 zur spanabhebenden Bearbeitung, eine Werkzeugaufnahmeantriebeinheit 24 zum Antreiben der Werkzeugaufnahme 18, eine Relativbewegungseinheit 26 zum relativen Bewegen von Werkzeugaufnahme 18 und Werkstück 28, eine Messeinrichtung 30 zum Erfassen der Position eines Oberflächenbereichs des Werkstücks 28 und eine Steuerung 32 auf. Bei der Messeinrichtung 30 kann es sich um einen in die Werkzeugaufnahme 18 einwechselbaren Messtaster 45 handeln.

Bei dem dargestellten Ausführungsbeispiel ist das Werkstück 28 auf einem in mehreren Richtungen beweglichen Werkstücktisch 34 aufgenommen, mit dem das Werkstück 28 an dem an der Spindel 20 drehbar aufgenommen Werkzeug 22 - insbesondere Fräser 36 - vorbei bewegt werden kann, um die spanende Bearbeitung durchzuführen. Die Bearbeitungseinrichtung 16 kann somit ortsfest bleiben. Bei anderen Ausführungsformen kann die Bearbeitungseinrichtung 16 bewegbar ausgeführt sein und der Werkzeugtisch 34 kann stationär bleiben oder ebenfalls bewegbar ausgeführt sein, auch dies ist für derartige Bearbeitungsmaschinen 12 gut bekannt. Mittels der Relativbewegungseinheit 26 sind somit Werkzeug 22 und Werkstück relativ zueinander bewegbar, wobei es unerheblich ist, ob das Werkzeug 22 oder das Werkstück 24 oder beide bewegt werden.

Bei der gezeigten Bearbeitungsmaschine 12 ist außerdem ein Werkzeugmagazin 38 und eine Werkzeugwechseleinrichtung 40 vorgesehen. Damit ist ein automatischer Austausch des jeweils gewünschten Werkzeugs 22 möglich. Auch dies ist bei Bearbeitungszentren 14 gut bekannt und wird daher nicht im Einzelnen beschrieben.

Die Bearbeitungsmaschine 12 wird mittels der Steuerung 32, welche einen Prozessor 42 (d.h. Rechner, Computer) und einen Speicher 44 aufweist, in welchem ein Computerprogramm mit Steueranweisungen geladen ist, gesteuert. Die Steuerung 32 kann Teil einer Gesamtsteuerung für die Fertigungslinie 10 sein oder eine einzelne Steuereinheit, die der jeweiligen Bearbeitungsmaschine 12 zugeordnet ist und von der Gesamtsteuerung angesteuert wird. Die im Folgenden näher erläuterten Verfahren können auch auf einer einzelnen Bearbeitungsmaschine 12, die nicht Teil einer Fertigungslinie 10 ist, durchgeführt werden.

In dem Speicher 44 der Steuerung 32 ist insbesondere ein Computerprogramm mit Anweisungen gespeichert, die die Bearbeitungsmaschine 12 veranlassen, ein Kennzeichnungsverfahren, ein Ausleseverfahren und/oder ein Werkstückbearbeitungsverfahren durchzuführen, wie sie im Folgenden anhand von bevorzugten Ausführungsbeispielen erläutert werden.

Mit bevorzugten Ausführungsformen der Verfahren kann das Werkstück 28 direkt von der Bearbeitungsmaschine 12 mit einem Fräswerkzeug - Fräser 36 - gekennzeichnet werden, bzw. mit einem Messtaster 45 der Messeinrichtung 30 identifiziert werden. Dadurch sind keine zusätzliche Hardware (Laser, Scanner) oder Verbrauchsmaterialien (Aufkleber, RFID-Tags) nötig. Außerdem können keine Verwechslungen mehr auftreten, weil die Kennzeichnung und die Identifikation direkt in der Bearbeitungsmaschine 12 ohne Bedienereinfluss stattfinden.

In den Figuren 3 bis 7 sind das Werkstück 28 und das Werkzeug 22 bei dem Durchführen des Kennzeichenverfahrens gemäß unterschiedlichen Ausführungsformen dargestellt. Das mittels der Bearbeitungsmaschine 12 durchzuführende Kennzeichnungsverfahren dient zum Kennzeichnen des Werkstücks 28 und umfasst die Schritte:
a) Bereitstellen des Werkzeugs 22 zur spanabhebenden Bearbeitung an der drehbaren Werkzeugaufnahme 18 der Bearbeitungsmaschine 12,
b) relatives lineares Bewegen der drehenden Werkzeugaufnahme 18 und des Werkstücks 28 entlang einer Linie an der Oberfläche des Werkstücks 28,
c) Steuern des Abstandes von Werkzeugaufnahme 18 und Werkstück 28 während des linearen Bewegens, so dass das Werkzeug 22 wahlweise eine Bearbeitungsposition zur spanabhebenden Bearbeitung des Werkstücks 28 und eine Freigabeposition, in der das Werkzeug 22 das Werkstück 28 nicht erfasst, während der linearen Bewegung derart einnimmt, dass entlang der Linie durch spanabhebende Bearbeitung mit dem Werkzeug 22 ein Muster von Markierungen 46 zum Bilden des Kennzeichens an der Oberfläche des Werkstücks 28 erzeugt wird.

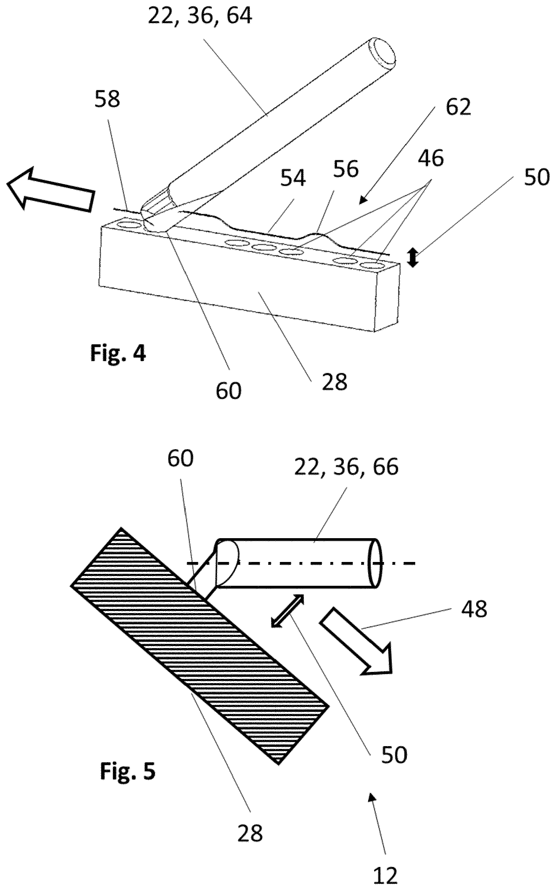

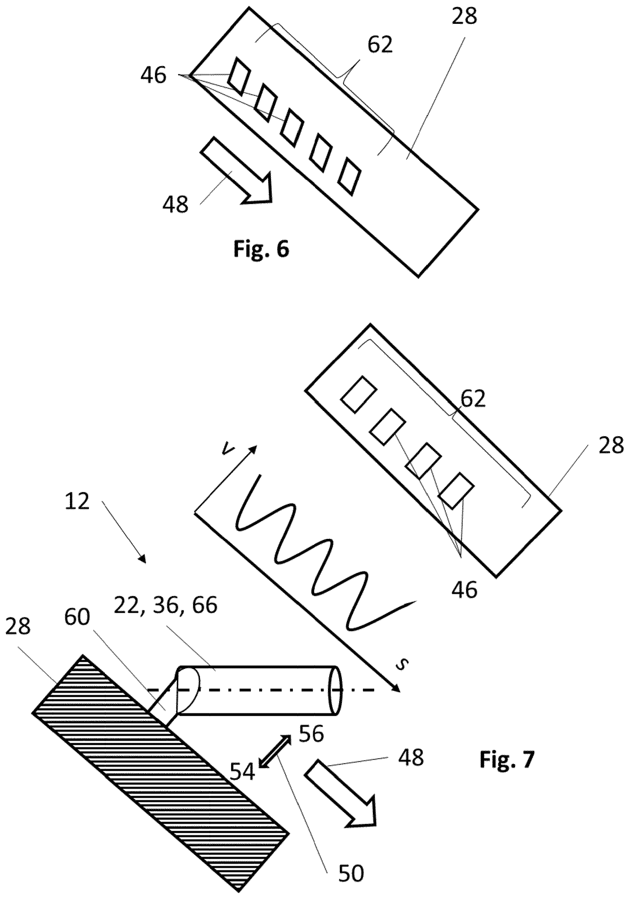

In den Fig. 3 und 5 und 7 ist hierzu die Bewegungsrichtung 48 der linearen Bewegung mit einem dicken Pfeil angedeutet, während ein kleiner Pfeil 50 in Fig. 5 und 7 und eine Bewegungskurve 52 in Fig. 4 das relative Anheben und Absenken zum Bewegen des Werkzeugs 22 zwischen der Bearbeitungsposition 54 und der Freigabeposition 56 verdeutlicht. In Fig. 3 ist die außerdem die Bewegungskurve 58 einer Schneide 60 des Fräser 36 angedeutet.

Insbesondere kann als Werkzeug 28 zur Kennzeichnung ein Schneidwerkzeug, ein Fräser 36, ein einschneidiges Werkzeug, ein mehrschneidiges Werkzeug, ein Kugelfräser, ein einschneidiger Kugelfräser 64, ein kegelförmiger Fräser 66 oder eine Kombinationswerkzeug mit mehreren Funktionen der vorgenannten Werkzeuge ausgewählt werden.

Vorzugsweise wird als Werkzeug 22 der Fräser 36 in Form eines einschneidigen Kugelfräsers 64 mit nur einer Schneide 60 eingesetzt. Eine erste Ausführungsform des Kennzeichnungsverfahrens mit einschneidigen Kugelfräser 64 ist in den Fig. 3 und 4 gezeigt, wo mit dem Kugelfräser 64 runde Markierungen 46 erzeugt werden. Fig. 3 zeigt eine Folge von Markierungen 46, die bei Drehen des Kugelfräsers 64 und relatives Bewegen von Werkzeugaufnahme 18 und Werkstück 28 mit gleichbleibendem Abstand erzeugt werden.

Fig. 4 zeigt die Bewegung der Werkzeugspitze, wenn bestimmte Markierungen 46 ausgelassen werden. Hierzu wird der Abstand von Werkstück 28 und Werkzeug 22 von der Eingriffsposition 54, wo Markierungen 46 erzeugt werden, in die Freigabeposition 56, wo Markierungen 46 ausgelassen werden, und umgekehrt eingestellt.

An der Linie 48, entlang der das Werkzeug 22 relativ zum Werkstück 28 über dessen Oberfläche verfahren wird, entsteht so ein Linienmuster von Markierungen 46, ähnlich eines Strichcodes, als Kennzeichen 62.

Es wäre auch möglich, durch entsprechendes Wiederholen der Bewegung an parallelen benachbarten Linien einen Matrix-Code wie z.B. einen QR-Code oder DMC-Code zu erzeugen.

Bei den in den Fig. 5 bis 7 gezeigten Ausführungsformen des Kennzeichnungsverfahrens wird ein Kegelfräser 66 verwendet, um parallelogrammförmige oder rechteckige Markierungen 46 zu erzeugen.

Fig. 3 sowie 5 zeigen die Bewegung des Werkzeugs 22 und der Werkzeugschneide 60 bei geradliniger Bewegung. Bei den in den Fig. 3 bis 6 gezeigten Ausgestaltungen wird das Werkzeug 22 gleichmäßig linear relativ zu dem Werkstück 28 bewegt. Bei der Verwendung des Kugelfräsers 64 entsteht gemäß den Fig. 3 und 4 eine Abfolge von runden Markierungen 46. Bei der Ausführungsform mit Kegelfräser 66 entstehen gemäß Fig. 6 parallelogrammförmige Markierungen 46.

Es ist aber auch möglich, die Geschwindigkeit der relativen Bewegung zu steuern, um eine vorbestimmte Form der Markierungen 46 zu erzeugen. Um rechteckige Markierungen 46 zu erzeugen, wird z.B. die Bewegungsgeschwindigkeit in dem Moment reduziert, in dem die Markierung 46 erzeugt wird, und wird zwischen den Markierungen 46 wieder erhöht, wie dies in Fig. 7 wiedergegeben ist. Dadurch lassen sich z.B. rechteckige oder quadratische Markierungen 46 erzeugen. Mittels der Bearbeitungsmaschine 12, 12.1-12.4 ist dann auch ein Ausleseverfahren zum Lesen des Kennzeichens 62 durchführbar. Das Ausleseverfahren umfasst die Schritte:
d) Kontaktieren der mit dem Kennzeichen 62 versehenen Oberfläche des Werkstücks 28 mittels des Messtasters 45 der Messeinrichtung 30 der Bearbeitungsmaschine 12;
e) relatives lineares Bewegen des die Oberfläche kontaktierenden Messtasters 45 und des Werkstücks 28 entlang der Linie von Markierungen 46 des Kennzeichens 62,
f) Erfassen von abhängig von der Position erfolgten Auslenkungen des Messtasters 45, um so das Kennzeichen 62 auszulesen.

Insbesondere wird so die die Markierungen 46 enthaltende Oberfläche des Werkstücks 28 mittels des Messtasters 45 abgetastet. Dabei kann als Messtaster 45 ein Schaltmesstaster verwendet werden.

Bevorzugte Verwendungen und Ausgestaltungen sowie Ausführungsvarianten werden im Folgenden näher erläutert.

### Beispiel einer Anwendung:

Bei der Herstellung von Werkstücken 28 wie z.B. Pumpenrädern oder sonstigen Serienprodukten wird oft eine große Menge von Werkstücken 28 in einer Bearbeitungsmaschine 12, 12.1-12.4 mit einem bestimmten Programm (zur Durchführung vorbestimmter Bearbeitungen) bearbeitet. Werden diese hier mit dem falschen Programm bearbeitet, können alle Werkstücke 28 Ausschuss werden, weil sie z.B. als Typ A geplant waren und in der ersten Operation (z.B. an der ersten Bearbeitungsmaschine 12.1) mit Typ A bearbeitet wurden, jedoch die Folgeoperation vom Typ B (z.B. an einer oder mehreren der zweiten bis vierten Bearbeitungsmaschine 12.2-12.4) durchgeführt wurden.

Wären die Werkstücke 28 in der ersten Operation gekennzeichnet worden und könnte die Bearbeitungsmaschine 12, 12.1-12.4 die Werkstücke 28 und somit den Typ identifizieren, würde die Bearbeitungsmaschine gar nicht erst mit der Bearbeitung starten.

Einige Ausführungsformen sehen somit ein Werkzeugbearbeitungsverfahren zur spanabhebenden Bearbeitung von Werkstücken 28, insbesondere in einer der Bearbeitungsmaschinen 12, 12.1-12.4 oder in der Fertigungslinie 10 mit den mehreren Bearbeitungsmaschinen 12, 12.1-12.4, vor, das umfasst:
g) Durchführen des Kennzeichnungsverfahrens zum Versehen des Werkstücks 28 mit einem Kennzeichen 62;
h) Identifizieren des Werkstücks 28 durch Auslesen des Kennzeichens 62, insbesondere mit dem vorerwähnten Ausleseverfahren; und
i) Durchführen einer Bearbeitung des Werkstücks 28 in Abhängigkeit von der in Schritt h) durchgeführten Identifikation.

Bei einigen Ausführungsformen wird Schritt g) während der Durchführung eines ersten Bearbeitungsschritts zur spanabhebenden Bearbeitung des Werkstücks durchgeführt, und die Schritte h) und i) werden während der Durchführung eines abhängig vom ersten Bearbeitungsschritt und/oder abhängig vom Typ des Werkstücks 28 durchzuführenden zweiten Bearbeitungsschritts durchgeführt. Zum Beispiel wird an der ersten Bearbeitungsmaschine 12.1 der Fertigungslinie 10 das Kennzeichnungsverfahren durchgeführt und eine weitere Bearbeitungsmaschine 12.2 der Fertigungslinie, die das Werkstück 28 danach erhält, liest das Kennzeichen 62 aus und erkennt daraus, welche Bearbeitung bereits an dem Werkstück 28 durchgeführt worden ist. Beispielsweise kann jede nachfolgende Bearbeitungsmaschine 12.2-12.4 das Kennzeichen 62 durch entsprechende Durchführung des Kennzeichnungsverfahren mit weiteren Markierungen 46 versehen, um das Werkstück 28 als ein Werkstück zu identifizieren, an dem der auf der jeweiligen Bearbeitungsmaschine 12.2-12.4 durchzuführende Bearbeitungsschritt durchgeführt worden ist.

Vorzugsweise werden mehrere Markierungen 46, insbesondere in Form von Ausnehmungen oder Vertiefungen, eingebracht, die gemeinsam das Kennzeichen 62 bilden. Bei bevorzugten Ausgestaltungen liegen die Markierungen 46 eines Kennzeichens 62 auf einer Linie, so dass sie durch eine lineare Bewegung eines Messtasters 45 ausgelesen werden können.

Prinzipiell wäre es auch möglich, einen Matrix-Code zu lesen bzw. zu schreiben indem jeder Punkt einzeln angefahren wird und getastet bzw. gebohrt wird. Je größer die Anzahl an Punkten wird (einige bekannte Matrix-Code-Technologien sehen z.B. mehr als 100 Punkte vor) würde das recht lange dauern, so dass ein Einbringen durch relativ kontinuierliche, nicht bei jeder Markierung reversierende Bewegung des Werkzeugs 22 vorteilhafter ist.

Bei einigen Ausführungsformen erfolgt die Kennzeichnung mit dem einschneidigen Kugelfräser 64. Durch eine rotierende Achse (i.d.R. die Spindel 20) wird diese Schneide 60 zyklisch in Eingriff gebracht und schneidet ein Stück Material aus der Oberfläche. Dieses herausgeschnittene Stück bildet somit die Markierung 46. In Verbindung mit mindestens einer weiteren Achse können viele Markierungen 46 sehr schnell entlang einer Linie erzeugt werden.

Für das Markieren ist keine oszillierende Bewegung erforderlich, sondern Werkzeug 22 und Werkstück 28 werden dabei relativ geradlinig bewegt. Lediglich zum Überspringen von Punkten muss die Bearbeitungsmaschine 12 von der linearen Bewegung abweichen und minimal abheben.

Beim Identifizieren wird ein Tastgerät, z.B. ein Schaltmesstaster (Messtaster 45), so über die Oberfläche bewegt, dass es das Vorhandensein oder Fehlen von Punkten erfasst. Z.B. wird ein Schaltmesstaster an Stellen, an denen kein Punkt markiert ist, ausgelenkt und an Stellen, an denen ein Punkt markiert ist, nicht ausgelenkt. Dadurch kann mit einer kontinuierlichen Bewegung der Code gelesen werden.

Beispiele für das Schneidwerkzeug:
Wenn runde Markierungen gewünscht sind, bietet sich ein einschneidiger Kugelfräser 64 an. Dieser erzeugt nahezu runde Markierungen 46, wie in Fig. 3 und 4 dargestellt.

Anzahl der Schneiden 60:
Durch mehrschneidige Werkzeuge 22 werden die Markierungen 46 zunehmend zu schrägen Strichen. Das kann in bestimmten Fällen gewünscht sein, um zwei unterschiedliche Markierungen zu erzeugen.

So kann im Vorlauf ein nach rechts geneigter Schrägstrich (/) erzeugt werden und im Rücklauf ein nach links geneigter Schrägstrich (\ ) erzeugt werden.

Form des Schneidwerkzeugs:
Die Form der Markierung 46 kann durch die Form des Schneidwerkzeugs angepasst werden. Am einfachsten sind runde Markierungen 46 mit einem Kugelfräser 64 zu erzeugen. Wird ein kegelförmiger Fräser 66 verwendet, können Markierungen in Parallelogramm-Form erzeugt werden, siehe Fig. 5 und 6.

Um rechteckige Markierungen 46 zu erzeugen, wird z.B. die Bewegungsgeschwindigkeit in dem Moment reduziert, in dem die Markierung 46 erzeugt wird und wird zwischen den Markierungen wieder erhöht, siehe das Geschwindigkeitsprofil in Fig. 7, wo die Relativbewegungsgeschwindigkeit v des Werkzeugs 22 über die Position s aufgetragen ist.

Auch ist zum Formen der Markierungen 46 denkbar, die Drehgeschwindigkeit zu verändern.

Um bei einer spanabhebenden Bearbeitung eines Werkstücks (28) an einer Bearbeitungsmaschine (12, 12.1-12.4) eine einfache Identifizierung des Werkstücks (28) mit wenig Aufwand zu ermöglichen, ist ein mittels der Bearbeitungsmaschine (12, 12.1-12.4) durchzuführendes Kennzeichnungsverfahren beschrieben worden, das die folgenden Schritte umfasst:
a) Bereitstellen eines Werkzeugs (22) an einer drehbaren Werkzeugaufnahme (18) der Bearbeitungsmaschine (12, 12.1-12.4),
b) relatives lineares Bewegen der Werkzeugaufnahme (18) und des Werkstücks (28) entlang einer Linie (48) an der Oberfläche des Werkstücks (28),
c) Steuern des Abstandes von Werkzeugaufnahme (18) und Werkstück (28) während der linearen Bewegung, so dass entlang der Linie (48) durch spanabhebende Bearbeitung mit dem Werkzeug (22) ein Muster von Markierungen (46) zum Bilden des Kennzeichens (62) an der Oberfläche des Werkstücks (28) erzeugt wird. Weiter wurden ein Ausleseverfahren, ein Bearbeitungsverfahren sowie eine zum Durchführen eingerichtete Bearbeitungsmaschine (12) beschrieben.

### Bezugszeichenliste:

- 10: Fertigungslinie
- 12: Bearbeitungsmaschine
- 12.1: erste Bearbeitungsmaschine
- 12.2: zweite Bearbeitungsmaschine
- 12.3: dritte Bearbeitungsmaschine
- 12.4: vierte Bearbeitungsmaschine
- 14: Bearbeitungszentrum
- 16: Bearbeitungseinrichtung
- 18: Werkzeugaufnahme
- 20: Spindel
- 22: Werkzeug
- 24: Werkzeugaufnahmeantriebseinheit (z.B. Spindelantrieb)
- 26: Relativbewegungseinheit
- 28: Werkstück
- 30: Messeinrichtung
- 32: Steuerung
- 34: Werkstücktisch
- 36: Fräser
- 38: Werkzeugmagazin
- 40: Werkzeugwechseleinrichtung
- 42: Prozessor
- 44: Speicher
- 45: Messtaster
- 46: Markierung
- 48: Bewegungsrichtung
- 50: Anheben/Absenken
- 52: Bewegungskurve des Werkzeugs (relativ zum Werkstück)
- 54: Bearbeitungsposition
- 56: Freigabeposition
- 58: Bewegungskurve Schneide
- 60: Schneide
- 62: Kennzeichen
- 64: Kugelfräser
- 66: Kegelfräser

## Patentansprüche

1. Mittels einer Bearbeitungsmaschine (12, 12.1-12.4) zur spanabhebenden Bearbeitung durchzuführendes Kennzeichnungsverfahren zum Kennzeichnen eines Werkstücks (28) umfassend:
a) Bereitstellen eines Werkzeugs (22) zur spanabhebenden Bearbeitung an einer drehbaren Werkzeugaufnahme (18) der Bearbeitungsmaschine (12, 12.1-12.4),
b) relatives lineares Bewegen der drehenden Werkzeugaufnahme (18) und des Werkstücks (28) entlang einer Linie (48) an der Oberfläche des Werkstücks (28),
c) Steuern des Abstandes von Werkzeugaufnahme (18) und Werkstück (28) während des linearen Bewegens, so dass das Werkzeug (22) wahlweise eine Bearbeitungsposition (54) zur spanabhebenden Bearbeitung des Werkstücks (28) und eine Freigabeposition (56), in der das Werkzeug (22) das Werkstück (28) nicht erfasst, während der linearen Bewegung derart einnimmt, dass für das Markieren keine oszillierende Bewegung durchgeführt wird, sondern das Werkzeug (22) und das Werkstück (28) dabei relativ geradlinig bewegt werden, und lediglich zum Auslassen bestimmter Markierungen (46) der Abstand von Werkstück (28) und Werkzeug (22) von der Eingriffsposition (54), wo Markierungen (46) erzeugt werden, in die Freigabeposition (56), wo Markierungen (46) ausgelassen werden, eingestellt wird, so dass entlang der Linie (48) durch spanabhebende Bearbeitung mit dem Werkzeug (22) ein Muster von Markierungen (46) mit unterschiedlichen Abständen und/oder Längen zum Bilden des linienförmigen Kennzeichens (62) an der Oberfläche des Werkstücks (28) erzeugt wird.

2. Kennzeichnungsverfahren nach Anspruch 1, **dadurch gekennzeichnet, dass** Schritt a) wenigstens einen oder mehrere der Schritte umfasst:
a1) Auswahl des Werkzeugs (22) aus einer Gruppe von Werkzeugen, die ein Schneidwerkzeug, einen Fräser (36), ein einschneidiges Werkzeug, ein mehrschneidiges Werkzeug, einen Kugelfräser, einen einschneidigen Kugelfräser (64), einen kegelförmigen Fräser (66) und Kombinationen der vorgenannten Werkzeuge aufweist,
a2) Bereitstellen des Werkzeugs (22) an einer Spindel (20) der Bearbeitungsmaschine (12, 12.1-12.4).

3. Kennzeichnungsverfahren nach einem der voranstehenden Ansprüche, **dadurch gekennzeichnet,**
**dass** Schritt b) wenigstens einen oder mehrere der folgenden Schritte umfasst:
b1) im Wesentlichen gleichmäßiges lineares relatives Bewegen von Werkzeugaufnahme (18) und Werkstück (28);
b2) Steuern der Geschwindigkeit der relativen Bewegung, um eine vorbestimmte Form der Markierungen (46) zu erzeugen;
b3) Bewegen des Werkstücks (28) und/oder Bewegen der Werkzeugaufnahme (18);
b4) Drehen der Werkzeugaufnahme (18) mit im Wesentlichen gleichbleibender Drehzahl.

4. Kennzeichnungsverfahren nach einem der voranstehenden Ansprüche, **dadurch gekennzeichnet,**
**dass** Schritt c) wenigstens einen oder mehrere der folgenden Schritte umfasst:
c1) Einbringen mehrerer Punkte, Linien oder Vertiefungen als Markierungen (46) in das Werkstück (28), deren Anordnung und/oder Länge auslesbare Daten oder Informationen des Kennzeichens (62) beinhalten;
c2) Erzeugen von runden Markierungen (46);
c3) Erzeugen von Markierungen (46) in Parallelogrammform;
c4) Erzeugen von rechteckigen bzw. quadratischen Markierungen (46).

5. Kennzeichnungsverfahren nach einem der voranstehenden Ansprüche, **dadurch gekennzeichnet,**
**dass** die Schritte b) und c) an beabstandeten Linien wiederholt werden, um ein zweidimensionales Muster von Markierungen (46) zum Schaffen des Kennzeichens (62) zu erzeugen.

6. Werkzeugbearbeitungsverfahren zur spanabhebenden Bearbeitung von Werkstücken (28) mittels einer Bearbeitungsmaschine (12, 12.1-12.4), **gekennzeichnet durch**:
g) Durchführen eines Kennzeichnungsverfahrens mittels der Bearbeitungsmaschine (12, 12.1-12.4), um das Werkstück (28) mit einem Kennzeichen (62) zu versehen, wobei das Kennzeichnungsverfahren die Schritte umfasst:
a) Bereitstellen eines Werkzeugs (22) zur spanabhebenden Bearbeitung an einer drehbaren Werkzeugaufnahme (18) der Bearbeitungsmaschine (12, 12.1-12.4),
b) relatives lineares Bewegen der drehenden Werkzeugaufnahme (18) und des Werkstücks (28) entlang einer Linie (48) an der Oberfläche des Werkstücks (28),
c) Steuern des Abstandes von Werkzeugaufnahme (18) und Werkstück (28) während des linearen Bewegens, so dass das Werkzeug (22) wahlweise eine Bearbeitungsposition (54) zur spanabhebenden Bearbeitung des Werkstücks (28) und eine Freigabeposition (56), in der das Werkzeug (22) das Werkstück (28) nicht erfasst, während der linearen Bewegung derart einnimmt, dass entlang der Linie (48) durch spanabhebende Bearbeitung mit dem Werkzeug (22) ein Muster von Markierungen (46) zum Bilden des Kennzeichens (62) an der Oberfläche des Werkstücks (28) erzeugt wird;
h) Identifizieren des Werkstücks (28) durch Auslesen des Kennzeichens (62),
i) Durchführen einer Bearbeitung des Werkstücks (28) in Abhängigkeit von der in Schritt h) durchgeführten Identifikation.

7. Werkzeugbearbeitungsverfahren nach Anspruch 6, wobei Schritt h) Durchführen eines mittels der Bearbeitungsmaschine (12, 12.1-12.4) durchzuführenden Ausleseverfahrens zum Lesen des Kennzeichens (62), umfasst, wobei das Ausleseverfahren die Schritte umfasst:
d) Kontaktieren einer mit dem Kennzeichen (62) versehenen Oberfläche eines Werkstücks (28) mittels eines Messtasters (45) der Bearbeitungsmaschine (12, 12.1-12.4);
e) relatives lineares Bewegen des die Oberfläche kontaktierenden Messtasters (45) und des Werkstücks (28) entlang einer Linie (48) von Markierungen (46) des Kennzeichens (62),
f) Erfassen von abhängig von der Position erfolgten Auslenkungen des Messtasters (45), um so das Kennzeichen (62) auszulesen.

8. Werkzeugbearbeitungsverfahren nach Anspruch 7, wobei Schritt h) weiter wenigstens einen oder mehrere der Schritte umfasst:
8.1 Abtasten der die Markierung (46) enthaltenden Oberfläche des Werkstücks (28) mittels des Messtasters (45);
8.2 Verwenden eines Schaltmesstasters.

9. Werkzeugbearbeitungsverfahren nach einem der Ansprüche 6 bis 8, **dadurch gekennzeichnet,**
**dass** Schritt g) Durchführen des Kennzeichnungsverfahren nach einem der Ansprüche 1 bis 5 umfasst.

10. Werkzeugbearbeitungsverfahren nach einem der Ansprüche 6 bis 9, **dadurch gekennzeichnet,**
**dass** Schritt g) während der Durchführung eines ersten Bearbeitungsschritts zur spanabhebenden Bearbeitung des Werkstücks (28) durchgeführt wird und dass die Schritte h) und i) während der Durchführung eines abhängig vom ersten Bearbeitungsschritt und/oder abhängig vom Typ des Werkstücks (28) durchzuführenden zweiten Bearbeitungsschritts durchgeführt werden.

11. Bearbeitungsmaschine (12, 12.1-12.4) zur spanabhebenden Bearbeitung von Werkstücken (28), umfassend eine Bearbeitungseinrichtung (16) mit wenigstens einem an einer Werkzeugaufnahme (18) vorgesehenen Werkzeug (22) zur spanabhebenden Bearbeitung, eine Werkzeugaufnahmeantriebeinheit (24) zum Antreiben der Werkzeugaufnahme (18), eine Relativbewegungseinheit (26) zum relativen Bewegen von Werkzeugaufnahme (18) und Werkstück (28), eine Messeinrichtung (30) zum Erfassen der Position eines Oberflächenbereichs des Werkstücks (28) und eine Steuerung (32),
**dadurch gekennzeichnet,**
**dass** die Steuerung (32) dazu eingerichtet ist, die Bearbeitungsmaschine (12, 12.1-12.4) zum Durchführen des Verfahrens nach einem der Ansprüche 1 bis 10 anzusteuern.

12. Fertigungslinie (10), umfassend mehrere Bearbeitungsmaschinen (12, 12.1-12.4) nach Anspruch 11.

13. Computerprogramm umfassend maschinenlesbare Anweisungen, die eine Bearbeitungsmaschine (12, 12.1-12.4) nach Anspruch 11 oder eine Fertigungslinie (10) nach Anspruch 12 veranlassen, das Verfahren nach einem der Ansprüche 1 bis 10 durchzuführen.

## Claims

1. A marking method to be performed by means of a processing machine (12, 12.1-12.4) for machining for marking a workpiece (28), the method comprising:
a) providing a tool (22) for machining on a rotatable tool holder (18) of the processing machine (12, 12.1-12.4),
b) relative linear movement of the rotating tool holder (18) and the workpiece (28) along a line (48) on the surface of the workpiece (28),
c) controlling the distance of tool holder (18) and workpiece (28) during the linear movement so that the tool (22) selectively assumes a processing position (54) for machining the workpiece (28) and a release position (56), in which the tool (22) does not grip the workpiece (28), during the linear movement, in such a way that no oscillating movement is carried out for marking, but that the tool (22) and the workpiece (28) are relatively linearly moved in the process and that merely for skipping certain markings (46), the distance of the workpiece (28) and the tool (22) is adjusted from the engagement position (54), where markings (46) are produced, to the release position, where markings (46) are skipped, so that a pattern of markings (46) with varying distances and/or lengths for forming the line-shaped identification mark (62) on the surface of the workpiece (28).

2. Marking method according to claim 1, **characterized in that** step a) comprises at least one or more of the steps:
a1) selecting the tool (22) from a group of tools comprising a cutting tool, a milling cutter (36), a single-edged tool, a multi-edged tool, a ball cutter, a single-edged ball cutter (64), a beveled milling cutter (66) and combinations of the aforementioned tools,
a2) providing the tool (22) on a spindle (20) of the processing machine (12, 12.1-12.4).

3. Marking method according to any one of the preceding claims, **characterized in that**
step b) comprises at least one or more of the following steps:
b1) substantially uniform linear relative movement of the tool holder (18) and the workpiece (28);
b2) controlling the speed of the relative movement to produce a predetermined form of the markings (46);
b3) moving the workpiece (28) and/or moving the tool holder (18);
b4) rotating the tool holder (18) at a substantially constant speed.

4. Marking method according to any one of the preceding claims, **characterized in that**
step c) comprises at least one or more of the following steps:
c1) incorporating several points, lines or indentations as markings (46) into the workpiece (28), the arrangement and/or length of which contain readable data or information of marking (62);
c2) generating round markings (46);
c3) generating markings (46) in the shape of a parallelogram;
c4) generating rectangular or square markings (46).

5. Marking method according to any one of the preceding claims, **characterized in that**
steps b) and c) are repeated at spaced lines to produce a two-dimensional pattern of markings (46) for creating the identification mark (62).

6. A tool processing method for machining workpieces (28) by means of a processing machine (12, 12.1-12.4), comprising:
g) performing a marking method using the processing machine (12, 12.1-12.4) for providing the workpiece (28) with an identification mark (62), wherein the marking method comprises the steps:
a) providing a tool (22) for machining on a rotatable tool holder (18) of the processing machine (12, 12.1-12.4),
b) relative linear movement of the rotating tool holder (18) and the workpiece (28) along a line (48) on the surface of the workpiece (28),
c) controlling the distance of tool holder (18) and workpiece (28) during the linear movement so that the tool (22) selectively assumes a processing position (54) for machining the workpiece (28) and a release position (56), in which the tool (22) does not grip the workpiece (28), during the linear movement, in such a way that a pattern of markings (46) for creating the identification mark (62) on the surface of the workpiece (28) is formed along line (48) by the machining process using the tool (22);
h) identifying the workpiece (28) by reading the identification mark (62),
i) performing processing of the workpiece (28) as a function of the identification carried out in step h).

7. Tool processing method according to step 6, wherein step h) comprises performing, by means of the processing machine (12, 12.1-12.4), a reading process for reading the identification mark (62), wherein the reading process comprises the steps:
d) contacting a surface of the workpiece (28) provided with the identification mark (62) by means of a touch probe (45) of the processing machine (12, 12.1-12.4);
e) relative linear movement of the touch probe (45) contacting the surface and the workpiece (28) along a line (48) of markings (46) of the identification mark (62),
f) detecting deflections of the touch probe (45) depending on the position in order to read out the identification mark (62).

8. Tool processing method according to claim 7, wherein step h) further comprises at least one or more steps:
8.1 scanning the surface of the workpiece (28) containing the marking (46) by means of the touch probe (45);
8.2 using an indexing probe.

9. Tool processing method according to any one of claim 6 to 8, **characterized in that**
step g) comprises carrying out the marking method according to any one of claims 1 to 5.

10. Tool processing method according to any one of claims 6 to 9, **characterized in that**
step g) is carried out during the execution of a first processing step for machining the workpiece (28), and **in that** steps h) and i) are carried out during the execution of a second processing step to be carried out as a function of the first processing step and/or as a function of the type of workpiece (28).

11. A processing machine (12, 12.1-12. 4) for machining workpieces (28), comprising a machining device (16) with at least one tool (22) provided on a tool holder (18) for machining, a tool holder drive unit (24) for driving the tool holder (18), a relative movement unit (26) for relative movement of the tool holder (18) and the workpiece (28), a measuring device (30) for detecting the position of a surface region of the workpiece (28), and a controller (32),
**characterized in that**
the controller (32) is configured to control the processing machine (12, 12. 1-12.4) for carrying out the method according to any one of claims 1 to 10.

12. A production line (10), comprising a plurality of processing machines (12, 12.1-12.4) according to one of claim 11.

13. A computer program comprising machine-readable instructions which cause a processing machine (12, 12.1-12.4) according to claim 11 or a production line (10) according to claim 12 to perform the method according to any one of claims 1 to 10.

## Revendications

1. Procédé de marquage destiné à être mis en œuvre à l'aide d'une machine d'usinage (12, 12.1-12.4) pour marquer une pièce à usiner (28), le procédé comprenant:
a) la fourniture d'un outil (22) pour l'usinage sur un porte-outil rotatif (18) de la machine d'usinage (12, 12.1-12.4),
b) le déplacement linéaire relatif du porte-outil rotatif (18) et de la pièce à usiner (28) le long d'une ligne (48) sur la surface de la pièce à usiner (28),
c) le contrôle de la distance entre le porte-outil (18) et la pièce à usiner (28) pendant le mouvement linéaire, de telle sorte que l'outil (22) prenne sélectivement une position d'usinage (54) pour usiner la pièce à usiner (28) et une position de relâchement (56), dans laquelle l'outil (22) ne saisit pas la pièce à usiner (28), pendant le déplacement linéaire, de telle sorte qu'aucun mouvement oscillant ne soit effectué pour le marquage, mais que l'outil (22) et la pièce à usiner (28) soient déplacés de manière relativement linéaire au cours du processus et que, uniquement pour sauter certains marquages (46), la distance entre la pièce à usiner (28) et l'outil (22) soit ajustée de la position d'engagement (54), où des marquages (46) sont réalisés, vers la position de dégagement, où les marquages (46) sont sautés, de sorte qu'un motif de marquages (46) présentant des distances et/ou des longueurs variables soit formé pour constituer la marque d'identification linéaire (62) sur la surface de la pièce à usiner (28).

2. Procédé de marquage selon la revendication 1, **caractérisé en ce que** l'étape a) comprend au moins une ou plusieurs des étapes suivantes:
a1) sélectionner l'outil (22) parmi un ensemble d'outils comprenant un outil de coupe, une fraise (36), un outil à simple tranchant, un outil à tranchants multiples, une fraise sphérique, une fraise sphérique à simple tranchant (64), une fraise biseautée (66) et des combinaisons des outils susmentionnés,
a2) la fourniture de l'outil (22) sur une broche (20) de la machine d'usinage (12, 12.1-12.4).

3. Procédé de marquage selon l'une quelconque des revendications précédentes, **caractérisé en ce que**
l'étape b) comprend au moins une ou plusieurs des étapes suivantes:
b1) un mouvement relatif linéaire sensiblement uniforme du porte-outil (18) et de la pièce à usiner (28);
b2) le contrôle de la vitesse du mouvement relatif afin de produire une forme prédéterminée des marquages (46);
b3) le déplacement de la pièce à usiner (28) et/ou le déplacement du porte-outil (18);
b4) la rotation du porte-outil (18) à une vitesse sensiblement constante.

4. Procédé de marquage selon l'une quelconque des revendications précédentes, **caractérisé en ce que**
l'étape c) comprend au moins une ou plusieurs des étapes suivantes:
c1) l'incorporation dans la pièce à usiner (28) de plusieurs points, lignes ou indentations servant de marquages (46), dont la disposition et/ou la longueur contiennent des données ou des informations lisibles de marquage (62);
c2) la génération de marquages (46) ronds;
c3) la génération de marquages (46) en forme de parallélogramme;
c4) la génération de marquages (46) rectangulaires ou carrés.

5. Procédé de marquage selon l'une quelconque des revendications précédentes, **caractérisé en ce que**
les étapes b) et c) sont répétées le long des lignes espacées afin de produire un motif bidimensionnel de marquages (46) pour créer la marque d'identification (62).

6. Procédé d'usinage à l'aide d'un outil destiné à usiner des pièces (28) au moyen d'une machine d'usinage (12, 12.1-12.4), comprenant:
g) l'exécution d'un procédé de marquage à l'aide de la machine d'usinage (12, 12.1-12.4) pour pourvoir la pièce à usiner (28) d'une marque d'identification (62), dans lequel le procédé de marquage comprend les étapes suivantes:
a) la fourniture d'un outil (22) d'usinage sur un porte-outil rotatif (18) de la machine d'usinage (12, 12.1-12.4),
b) le déplacement linéaire relatif du porte-outil rotatif (18) et de la pièce à usiner (28) le long d'une ligne (48) sur la surface de la pièce à usiner (28),
c) contrôler la distance entre le porte-outil (18) et la pièce à usiner (28) pendant le mouvement linéaire de telle sorte que l'outil (22) prenne sélectivement une position d'usinage (54) pour usiner la pièce à usiner (28) et une position de relâchement (56), dans laquelle l'outil (22) ne saisit pas la pièce à usiner (28), pendant le mouvement linéaire, de telle sorte qu'un motif de marquages (46) destiné à créer la marque d'identification (62) sur la surface de la pièce (28) soit formé le long de la ligne (48) par le processus d'usinage à l'aide de l'outil (22);
h) identifier la pièce à usiner (28) en lisant la marque d'identification (62),
i) effectuer l'usinage de la pièce (28) en fonction de l'identification réalisée à l'étape h).

7. Procédé d'usinage à l'aide d'un outil selon la revendication 6, dans lequel l'étape h) comprend la réalisation, au moyen de la machine d'usinage (12, 12.1-12.4), d'un processus de lecture pour lire la marque d'identification (62), le processus de lecture comprenant les étapes suivantes:
d) mettre en contact une surface de la pièce (28) pourvue de la marque d'identification (62) au moyen d'un palpeur (45) de la machine d'usinage (12, 12.1-12.4) ;
e) le déplacement linéaire relatif du palpeur (45) en contact avec la surface et de la pièce (28) le long d'une ligne (48) de marquages (46) de la marque d'identification (62),
f) la détection des déviations du palpeur (45) en fonction de la position afin de lire la marque d'identification (62).

8. Procédé d'usinage selon la revendication 7, dans lequel l'étape h) comprend en outre au moins une ou plusieurs étapes:
8.1 palper la surface de la pièce (28) comportant le marquage (46) au moyen du palpeur (45);
8.2 l'utilisation d'un palpeur d'indexation.

9. Procédé d'usinage selon l'une quelconque des revendications 6 à 8, **caractérisé en ce que**
l'étape g) comprend l'exécution du procédé de marquage selon l'une quelconque des revendications 1 à 5.

10. Procédé d'usinage selon l'une quelconque des revendications 6 à 9, **caractérisé en ce que**
l'étape g) est mise en œuvre pendant l'exécution d'une première étape d'usinage de la pièce (28), et **en ce que** les étapes h) et i) sont mises en œuvre pendant l'exécution d'une deuxième étape d'usinage à réaliser en fonction de la première étape d'usinage et/ou en fonction du type de pièce à usiner (28).

11. Machine d'usinage (12, 12.1-12.4) destinée à l'usinage de pièces à usiner (28), comprenant un dispositif d'usinage (16) muni d'au moins un outil (22) monté sur un porte-outil (18) pour l'usinage, une unité d'entraînement de porte-outil (24) destinée à entraîner le porte-outil (18), une unité de déplacement relatif (26) destinée au déplacement relatif du porte-outil (18) et de la pièce à usiner (28), un dispositif de mesure (30) destiné à détecter la position d'une zone de surface de la pièce à usiner (28), et un contrôleur (32),
**caractérisée en ce que**
le contrôleur (32) est configuré pour commander la machine d'usinage (12, 12.1-12.4) afin de mettre en œuvre le procédé selon l'une quelconque des revendications 1 à 10.

12. Ligne de production (10), comprenant une pluralité de machines d'usinage (12, 12.1 à 12.4) selon la revendication 11.

13. Programme informatique comprenant des instructions lisibles par machine qui amènent une machine d'usinage (12, 12.1-12.4) selon la revendication 11 ou une chaîne de production (10) selon la revendication 12 à mettre en œuvre le procédé selon l'une quelconque des revendications 1 à 10.
